# EUROPÄISCHE PATENTANMELDUNG

(11) **EP 3 067 567 A1**
(43) Veröffentlichungstag der Anmeldung: **14.09.2016**
(21) Anmeldenummer: 15158563.5
(22) Anmeldetag: 11.03.2015
(51) Int. Cl.: F04D 19/04, F04D 29/059, F04C 18/16

(54) **VAKUUMPUMPE**

(71) Anmelder: Pfeiffer Vacuum GmbH, 35614 Aßlar (DE)
(72) Erfinder: Conrad, Armin, 35745 Herborn (DE); Becker, Jonas, 35435 Wettenberg (DE)
(74) Vertreter: Knefel, Cordula

(57) **Zusammenfassung**

Die Erfindung betriff eine einflutige Vakuumpumpe (1) mit einem Einlass (2) und einem Auslass (3), mit einem Rotor (4) und einem Stator (5), wobei der Rotor (4) mit zwei Lagern (9,10) drehbar im Stator (5) gelagert ist, bei der zusätzlich zu den zwei Lagern (9,10) ein in axialer Richtung wirkendes Magnetlager (13) vorgesehen ist.

## Beschreibung

Die Erfindung betrifft eine Vakuumpumpe, insbesondere eine Turbomolekularpumpe, eine Schraubenpumpe, Kreuzgewindepumpe oder Molekularpumpe, vorzugsweise mit wenigstens einer Gaede- und/oder einer Holweckpumpstufe.

Vakuumpumpen werden in verschiedenen technischen Verfahren, wie zum Beispiel bei der Halbleiterherstellung eingesetzt, um ein zu pumpendes Gas, welches auch als Pumpgas bezeichnet wird, aus einem zu evakuierenden Volumen abzufördern und ein für das jeweilige technische Verfahren notwendiges Vakuum zu erzeugen. Besondere Bedeutung kommt dabei Turbomolekularpumpen zu, die mit hohen Drehzahlen betrieben werden und in der Lage sind, ein Vakuum mit hoher Reinheit zu erzeugen.

Bei den Vakuumpumpen unterscheidet man einflutige und mehrflutige Vakuumpumpen. Die einflutigen Vakuumpumpen weisen einen Einlass, der mit einem Rezipienten verbunden ist, und einen Auslass auf. Die Pumpwirkung einer Anordnung aus Rotor- und Statorschaufeln, wie sie bei Turbomolekularpumpen vorgesehen ist, beruht auf der Impulsübertragung von den schnell rotierenden Schaufeln auf die zu pumpenden Gasmoleküle. Moleküle, die auf die Schaufeln treffen, werden dort adsorbiert und verlassen nach einer gewissen Zeit die Schaufel wieder. Dabei addiert sich die Schaufelgeschwindigkeit zur thermischen Molekülgeschwindigkeit. Damit die durch die Schaufel übertragene Geschwindigkeitskomponente nicht durch Stöße mit anderen Molekülen verloren geht, muss Molekularströmung in der Pumpe herrschen, das heißt die mittlere freie Weglänge muss größer sein als der Schaufelabstand.

Bei zwei- oder mehrflutigen Pumpen sind beispielsweise ein Gaseinlass, der mit dem Rezipienten verbunden ist, und zwei Auslässe vorgesehen. Das Gas wird von dem einen Gaseinlass umgelenkt und in Richtung der zwei Auslässe über die pumpaktiven Strukturen transportiert. Zweiflutige Pumpen weisen eine relativ große Baulänge auf. Aus diesem Grunde wird je nach Anwendungsgebiet die kleiner bauende einflutige Vakuumpumpe bevorzugt.

Bei einer einflutigen Pumpe ergeben sich aufgrund der Gasförderrichtung und der Druckdifferenz zwischen Ein- und Auslass der Pumpe zusätzliche dynamische oder statische Lager-Axialkraftkomponenten. Diese Kräfte werden in der Regel von einem Festlager aufgenommen. Je nach Druckdifferenz und Rotordurchmesser können insbesondere die statischen Axialkräfte sehr groß werden und die zulässigen Axiallasten des Festlagers übersteigen. Insbesondere bei schnelldrehenden Pumpsystemen wie Turbomolekularpumpen oder Kreuzgewindepumpen oder dergleichen sind die maximal möglichen Axialkräfte aufgrund der kompakten Lagerbaugröße (kompakte Lager aufgrund der Fliehkraftbelastung der Lagerbauteile, insbesondere des Lagerkäfigs) limitiert.

Das der Erfindung zugrunde liegende technische Problem besteht darin, eine einflutige Vakuumpumpe anzugeben, bei der trotz der dynamischen und statischen Lager-Axialkraftkomponenten eine kompakte Lagerbaugröße vorgesehen ist.

Dieses technische Problem wird durch eine einflutige Vakuumpumpe mit den Merkmalen gemäß Anspruch 1 gelöst.

Die einflutige Vakuumpumpe mit einem Einlass und einem Auslass mit einem Rotor und einem Stator, wobei der Rotor mit zwei Lagern drehbar im Stator gelagert ist, zeichnet sich dadurch aus, dass zusätzlich zu den zwei Lagern ein in axialer Richtung wirkendes Magnetlager vorgesehen ist.

Turbomolekularpumpen laufen mit bis zu 60.000 Umdrehungen pro Minute. Teilweise liegt die Zahl der Umdrehungen sogar noch höher. Bei diesen hohen Umdrehungszahlen und bei den einflutigen Pumpen werden die Axialkräfte für die Lager sehr groß. Bei zweiflutigen Pumpen tritt das Problem nicht auf, da das Gas über einen Einlass, beispielsweise nach rechts und links geleitet wird, so dass sich die Axialkräfte hier weitgehend aufheben.

Bei einer einflutigen Pumpe treten die Axialkräfte auf, da sie nicht kompensiert werden.

Die Erfindung sieht nunmehr vor, zur Lagerung des Rotors im Stator zwei zum Stand der Technik gehörende Lager, beispielsweise ein Wälzlager und ein Magnetlager vorzusehen. Darüber hinaus ist zusätzlich ein in axialer Richtung wirkendes Magnetlager vorgesehen, welches eine Druckkraft ausübt, die entgegengesetzt zu der Förderrichtung der Gasmoleküle wirkt. Hierdurch werden die Lager-Axialkraftkomponenten durch das zusätzliche in axialer Richtung wirkende Magnetlager zumindest teilweise kompensiert.

Die Anordnung des in axialer Richtung wirkenden Magnetlagers weist den weiteren Vorteil auf, dass zu Beginn eines Pumpvorganges auf der Ansaugseite wie auch auf der Ausstoßseite Atmosphärendruck anliegt und dass das axial wirkende Magnetlager keine Druckkraft aufbringen muss oder lediglich eine Kraft zur Vorspannung des oder der Lager, die zur Lagerung des Rotors in dem Stator vorgesehen sind. Zwischen Einlass und Auslass der Vakuumpumpe kann das Magnetlager die beiden Lager oder ein Lager (Festlager) vorspannen. Das Magnetlager kann hierbei anziehend oder abstoßend angeordnet sein. Die Lager zur Lagerung des Rotors in dem Stator sind vorteilhaft in axialelastischen Fassungen mit unterschiedlichen Steifigkeiten montiert. Unter der Druckkraft stellen sich die benötigten Axialkraftkomponenten durch das axiale Verfahren des Rotors selbstständig ein. Für die ordnungsgemäße Funktion der erfindungsgemäßen Vakuumpumpe ist daher das Verhältnis der unterschiedlichen Steifigkeiten in axialer Richtung (Lagerung Loslager- und Festlagerseite sowie zusätzliches Magnetlager) entscheidend.

Vor dem Pumpvorgang, das heißt im Zustand der Druckgleichheit zwischen Ansaugseite und Ausstoßseite übernimmt das in axialer Richtung wirkende Magnetlager vorteilhaft die Aufgabe der axialen Vorspannung des Festlagers. Der Spalt zwischen beispielsweise den Magnetringpaaren des axial wirkenden Magnetlagers ist minimal. Mit zunehmender Druckdifferenz zwischen Ansaugseite und Ausstoßseite während des Pumpvorganges erfährt das Magnetlager eine Spaltvergrößerung, hervorgerufen durch die Druckkraft. Bei der maximal zu erwartenden Druckdifferenz stellt sich die größte Druckkraft ein. In diesem Zustand ist der Magnetlagerspalt maximal und die Magnetlageraxialkraft minimal. Die Druckkraft wird nun vollständig von dem Festlager aufgenommen.

Die axiale Steifigkeit der Festlageraufnahme ist sehr viel größer als die Steifigkeit der Loslageraufnahme und des Magnetlagers. Durch die geringe axiale Steifigkeit des Loslagers ergeben sich hier nur vergleichsweise geringfügige Änderungen in der Lagervorspannung.

Eine betriebsbedingte Wärmeausdehnung der Bauteile führt zu einem Anstieg der axialen Lagerkraftkomponenten. Die axialen Steifigkeiten der Lageraufnahmen und des Magnetlagers sind derart auszulegen, dass sowohl die notwendigen Verfahrwege als auch die Einflüsse der wärmebedingten Längenänderungen minimal sind.

Eine vorteilhafte Ausführungsform der Erfindung sieht vor, dass das zusätzliche Lager als ein eine Axial- und eine Radialkraft auf den Rotor ausübendes Lager ausgebildet ist oder dass das zusätzliche Lager als ein ausschließlich in axialer Richtung wirkendes Lager ausgebildet ist.

Ist das Lager als ein eine Axial- und eine Radialkraft auf den Rotor ausübendes Lager ausgebildet, weist es beispielsweise konzentrische Ringpaare auf, bei denen durch einen Versatz eine definierte Axialkraftkomponente erzeugt wird. Es handelt sich hierbei um ein üblicherweise bei hybridgelagerten Turbomolekularpumpen eingesetztes Radiallager.

Es besteht jedoch auch die Möglichkeit, das Lager als Axiallager auszubilden, bei dem Magnetringpaare gegenüberliegend angeordnet sind.

Eine weitere vorteilhafte Ausführungsform der Erfindung sieht vor, dass das Magnetlager als Permanentmagnetlager oder als aktives Magnetlager ausgebildet ist. Das permanent erregte Magnetlager weist den Vorteil auf, dass dieses preisgünstiger ausgestaltet ist. Ein aktives Magnetlager kann beispielsweise mit einer Regelung versehen sein.

Gemäß einer weiteren vorteilhaften Ausführungsform der Erfindung ist wenigstens eines der zwei Lager zur Lagerung des Rotors in dem Stator als Wälzlager ausgebildet. Wälzlager sind sehr preisgünstig ausgestaltet. Das wenigstens eine Lager ist gemäß einer vorteilhaften Ausführungsform der Erfindung als Kugellager ausgebildet.

Gemäß einer weiteren vorteilhaften Ausführungsform der Erfindung ist das wenigstens eine Lager als Schrägkugellager oder als Rillenkugellager ausgebildet.

Diese Lager sind bei preisgünstiger Bauweise sehr zuverlässig.

Eine andere Ausführungsform der Erfindung sieht vor, das wenigstens eines der zwei Lager zur Lagerung des Rotors als aktives Magnetlager oder als Luftlager ausgebildet ist. Diese Ausführungsform weist den Vorteil auf, dass diese Lager keine Schmiermittel benötigen, also schmiermittelfrei arbeiten. Insbesondere auf der Hochvakuumseite werden diese Lager üblicherweise eingesetzt, da in diesem Fall keine Ausgasungen eines Schmiermittels das Hochvakuum verunreinigen können.

Gemäß einer weiteren vorteilhaften Ausführungsform der Erfindung ist vorgesehen, dass ein hochvakuumseitig angeordnetes Wälzlager als schmiermittelfreies Wälzlager ausgebildet ist. Um Ausgasungen zu vermeiden, wird bei Anordnung eines Wälzlagers auf Hochvakuumseite das Wälzlager schmiermittelfrei gewählt.

Eine weitere vorteilhafte Ausführungsform der Erfindung sieht vor, dass das Wälzlager mit Schmiermittelschmierung ein Schmiermittelreservoir und eine Schmiermittelpumpe aufweist.

Für einen dauerhaften Betrieb ist es vorteilhaft, ein Schmiermittelreservoir vorzusehen, beispielsweise in der Art eines ölgetränkten Vlieses. Die Schmiermittelpumpe besteht vorteilhaft aus einem sich mit dem Rotor drehenden Konus, der sich vom Schmiermittelreservoir zum Lager hin erweiternd ausgebildet ist. In diesem Falle gelangt das Schmiermittel aufgrund der Fliehkraft automatisch zu dem Wälzlager.

Gemäß einer weiteren vorteilhaften Ausführungsform der Erfindung ist vorgesehen, dass die zwei Lager der Vakuumpumpe als Loslager und als Festlager ausgebildet sind und dass das zusätzliche Magnetlager als ein das Festlager vorspannendes Lager ausgebildet ist. Ist beispielsweise ein Schrägkugellager vorgesehen, ist dieses Lager vorzuspannen. Das zusätzliche Magnetlager kann diese Aufgabe mit übernehmen, um die Anordnung weiterer Lager oder weiterer Vorrichtungen zu vermeiden.

Eine vorteilhafte Ausführungsform der Erfindung sieht vor, dass das zusätzliche Magnetlager als anziehendes oder abstoßendes Magnetlager ausgebildet ist. Je nach Bauform der Vakuumpumpe und Anordnung des Magnetlagers kann die Ausgestaltung des Magnetlagers entsprechend gewählt werden.

Gemäß einer weiteren vorteilhaften Ausführungsform der Erfindung ist vorgesehen, dass das zusätzliche aktive Magnetlager als geregeltes Magnetlager ausgebildet ist. Hierdurch ist es möglich, auf die während des Pumpvorganges auftretende Druckkraft zu reagieren und das Magnetlager entsprechend zu regeln.

Eine weitere vorteilhafte Ausführungsform der Erfindung sieht vor, dass eine axiale Steifigkeit einer Festlageraufnahme größer ist als die Steifigkeit einer Loslageraufnahme und des Magnetlagers. Wie schon beschrieben, ist dies vorteilhaft, da während des Pumpvorganges und der maximal zu erwartenden Druckdifferenz die Druckkraft vollständig von dem Festlager aufgenommen wird, so dass die axiale Steifigkeit der Festlageraufnahme sehr viel größer als die Steifigkeit der Loslageraufnahme und des Magnetlagers sein sollte.

Gemäß einer bevorzugten Ausführungsform der Erfindung ist die Vakuumpumpe als Schraubenpumpe und/oder als Kreuzgewindepumpe und/oder als Turbomolekularpumpe und/oder als Molekularpumpe, vorzugsweise mit wenigstens einer Gaede- und/oder Holweckpumpstufe ausgebildet. Bei diesen Vakuumpumpen handelt es sich um so genannte schnelldrehende Pumpen mit Umdrehungen von beispielsweise bis zu 90.000 Umdrehungen pro Minute. Die Vakuumpumpe kann auch als Kombination mit unterschiedlichen Pumpstufen ausgebildet sein. So ist es zum Beispiel üblich, Turbomolekularpumpstufen mit Holweckpumpstufen in einer Pumpe zu kombinieren.

Die erfindungsgemäße Ausführungsform mit dem zusätzlich zu den zwei Lagern in axialer Richtung wirkenden Magnetlager ist bei sämtlichen einflutigen Pumpen mit einer axialen Beweglichkeit einsetzbar. Radiale Spalte können sehr gering ausgeführt sein.

Weitere Merkmale und Vorteile der Erfindung ergeben sich anhand der zugehörigen Zeichnung, in der mehrere Ausführungsbeispiele einer erfindungsgemäßen Vakuumpumpe nur beispielhaft dargestellt sind. In der Zeichnung zeigen:
- Fig. 1: eine schematische Darstellung einer Vakuumpumpe im Längsschnitt;
- Fig. 2: die Darstellung eines Kraftverlaufes der Lagerkomponenten der Pumpe gemäß Fig. 1 in Abhängigkeit von der Rotorposition;
- Fig. 3: einen Längsschnitt durch eine Vakuumpumpe mit Holweckpumpstufe und Kreuzgewindepumpstufe.

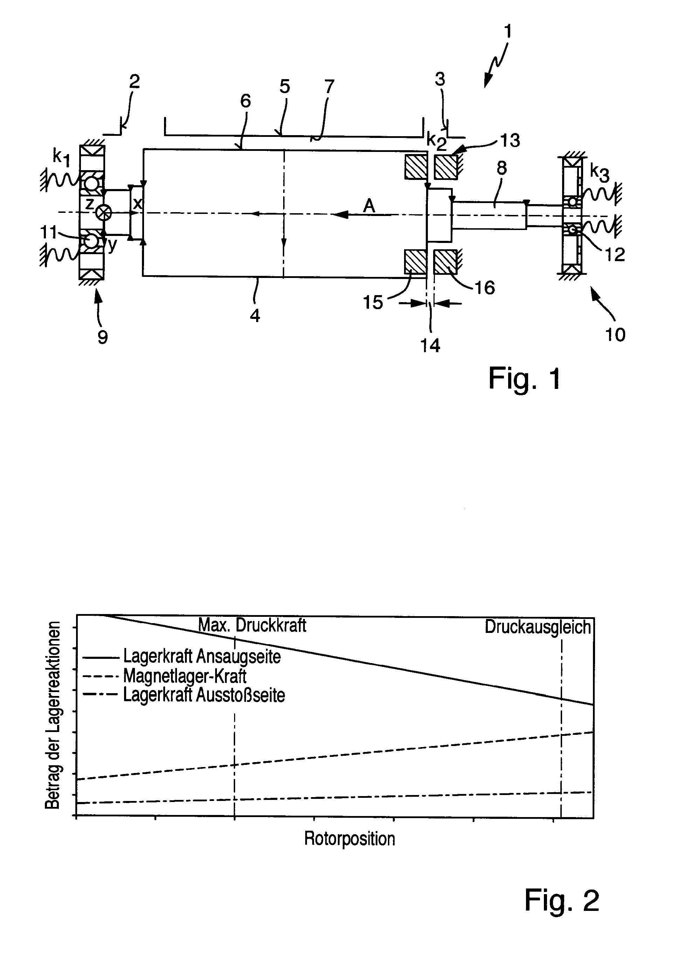

Fig. 1 zeigt eine Pumpe 1, deren Pumpstufen nicht dargestellt sind. Es kann sich um eine Turbomolekularpumpstufe und/oder Schraubenpumpstufe und/oder Kreuzgewindepumpstufe und/oder eine Molekularpumpe mit einer Gaede- und/oder Holweckpumpstufe handeln.

Die Vakuumpumpe 1 weist einen Einlass 2 und einen Auslass 3 auf. Es handelt sich um eine einflutige Vakuumpumpe.

Der Rotor 4, der zusammen mit einem Stator 5 und pumpaktiven Flächen 6, 7 eine oder mehrere Pumpstufen bildet, ist auf einer Welle 8 in Lageranordnungen 9, 10 drehbar gelagert. Die Lageranordnung 9 enthält ein Schrägkugellager 11. Das Schrägkugellager 11 ist als Festlager ausgebildet. Die Lageranordnung 10 weist ein Rillenkugellager auf, welches als Loslager ausgebildet ist.

Darüber hinaus ist ein Permanentmagnetlager 13 vorgesehen, welches ausschließlich in axialer Richtung wirkt. Zu Beginn eines Pumpvorganges herrscht zwischen Einlass 2 und Auslass 3 Druckgleichheit. In diesem Zustand wird das Schrägkugellager 9 (Festlager) durch das Permanentmagnetlager 13 vorgespannt. Während des Pumpvorganges stellen sich durch die in Fig. 1 dargestellte Anordnung die Kraftkomponenten durch das axiale Verfahren des Rotors selbstständig ein. Im Zustand des Druckausgleiches übernimmt das Permanentmagnetlager 13 die Aufgabe der axialen Vorspannung des Festlagers 11. Der Spalt 14 zwischen den Magnetringpaaren 15, 16 ist minimal. Mit zunehmender Druckdifferenz zwischen Ansaugseite (Einlass 2) und Ausstoßseite (Auslass 3) erfährt das Permanentmagnetlager 13 eine Spaltvergrößerung, hervorgerufen durch die Druckkraft, die in Richtung des Pfeiles A wirkt. Bei der maximal zu erwartenden Druckdifferenz stellt sich die größte Druckkraft ein. In diesem Zustand ist der Magnetlagerspalt 14 maximal und die Magnetlageraxialkraft minimal. Die Druckkraft wird nun vollständig von dem Festlager 9 aufgenommen. Die axiale Steifigkeit *k*₁ der Festlageraufnahme 9 ist sehr viel größer als die Steifigkeit *k*₃ der Loslageraufnahme 10 und die axiale Steifigkeit *k*₂ des Magnetlagers. Durch die geringe axiale Steifigkeit *k*₁ des Loslagers 9 ergeben sich hier nur vergleichsweise geringfügige Änderungen in der Lagervorspannung. Die betriebsbedingte Wärmedehnung der Bauteile führt zu einem Anstieg der axialen Lagerkraftkomponenten. Die axialen Steifigkeiten *k*₁*, k*₂, *k*₃ der Lageraufnahmen 10, 11 und des Magnetlagers 13 sind so auszulegen, dass sowohl die notwendigen Verfahrwege als auch die Einflüsse der wärmebedingten Längenänderungen minimal sind.

Durch das Permanentmagnetlager 13 wird das Schrägkugellager 11 (Festlager) vorgespannt. Grundsätzlich ist es möglich, die großen axialen Kräfte, beispielsweise 450 Newton in Folge des Druckunterschiedes zwischen Einlass 2 und Auslass 3 aufzufangen. Die minimale Vorspannkraft für dieses Lager 11 darf einen bestimmten Wert jedoch nicht unterschreiten. Wird diese Vorspannkraft mit einem zweiten Lager aufgebracht, so muss dieses Lager ebenfalls eine gewisse Größe besitzen, da die notwendige Axialvorspannkraft die zulässigen Werte kompakter Lager, in der Regel übersteigen. Mit der dargestellten Lösung kann auf der Loslagerseite 10 weiterhin ein kompaktes Lager 12 zum Einsatz kommen. Für kompakte Lager existieren zuverlässige und kostengünstige Schmierungslösungen, zum Beispiel Filzschmierungen (Schmiermittelreservoir).

Fig. 2 zeigt den Kraftverlauf der Lagerkomponenten in Abhängigkeit von der Rotorposition.

Im Zustand des Druckausgleiches übernimmt das Magnetlager 13 die Aufgabe der axialen Vorspannung des Festlagers 9. Der Spalt 15 zwischen den Magnetringpaaren 15, 16, 17 ist minimal. Mit zunehmender Druckdifferenz zwischen der Ansaugseite (Einlass 2) und der Ausstoßseite (Auslass 3) erfährt das Magnetlager 13 eine Spaltvergrößerung, hervorgerufen durch die Druckkraft, die in Richtung des Pfeiles A (Fig. 1) wirkt. Bei der maximal zu erwartenden Druckdifferenz stellt sich die größte Druckkraft ein. In diesem Zustand ist der Magnetlagerspalt 14 maximal und die Magnetlageraxialkraft minimal. Die Druckkraft wird nun vollständig von dem Festlager 9 aufgenommen.

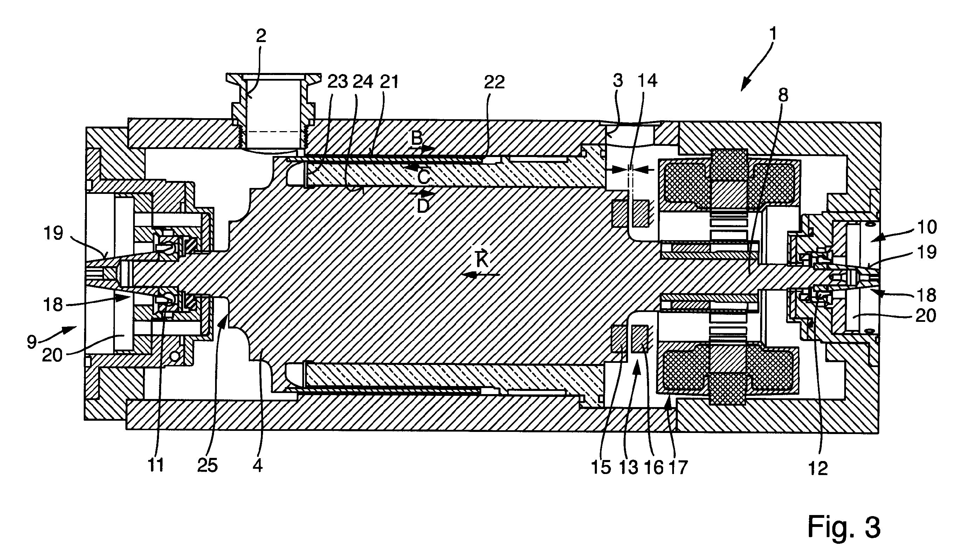

Fig. 3 zeigt eine konkrete Ausgestaltung der Vakuumpumpe 1, die den Einlass 2 und den Auslass 3 aufweist. Der Rotor 4 ist mittels einer Welle 8 in den Lageranordnungen 9, 10 gelagert. Zum Antrieb des Rotors 4 ist ein elektrischer Antrieb 17 vorgesehen.

Die Lageranordnungen 9 und 10 weisen jeweils eine Schmiereinrichtung 18 auf. Die Schmiereinrichtung 18 besteht aus einem konischen Abschnitt 9 der Welle 8 und einem Schmiermittelreservoir 20, beispielsweise in Form eines ölgetränkten Vlieses. Durch Drehung der Welle 8 und der konischen Abschnitte 19 gelangt das Schmiermittel aufgrund der Fliehkraft in Richtung der Lager 11, 12.

Eine Schmiermittellagerung des Lagers 11 ist möglich, wenn der Druckbereich hochvakuumseitig entsprechend niedrig gewählt wird. Ansonsten würde die Lageranordnung 9 als schmiermittelfreies Lager ausgebildet.

Das Lager 11 ist als Festlager ausgebildet, das Lager 12 ist als Loslager ausgebildet.

Der Rotor 4 weist eine Holweckpumpstufe sowie eine Kreuzgewindepumpstufe auf.

Durch den Einlass 2 wird das Gas in radialer Richtung der außen liegenden Holweckpumpstufen 21 in Richtung des Pfeiles B gefördert, am Ende 22 der Holweckpumpstufe 21 umgeleitet und in Richtung des Pfeiles C an der in radialer Richtung innenliegenden Seite der Holweckpumpstufe 21 weiter geleitet. Durch einen Kanal 23 wird das Gas einer Kreuzgewindepumpstufe 24 zugeführt. Bei einem Druckunterschied zwischen dem Einlass 2 und dem Auslass 3 resultiert eine Kraft *K̅.* Diese *Kraft K̅* wirkt als Axialkraft auf die Lager 11, 12. Damit die Axialkraftkomponente *̅K̅*̅ nicht zu groß wird, ist das Permanentmagnetlager 13 vorgesehen, welches aus sich gegenüberliegenden Magnetringpaaren 15, 16 gebildet ist. Dieses Permanentmagnetlager 13 kann derart ausgebildet sein, dass die Permanentmagnetringpaare 15, 16 sich anziehend ausgebildet sind und damit der Axialkraftkomponente *̅K̅*̅ entgegenwirken. Je größer die Axialkraft ***̅K̅*̅** dem Betrag nach wird, um so größer wird der Spalt 14 zwischen den Magnetringpaaren. Es findet durch die Magnetringpaare 15, 16 ein Ausgleich statt, der sich über den Spalt 14 und die sich damit verändernde Magnetkraft selbst regelt.

Das Permanentmagnetringlager 13 kann auch derart ausgebildet sein, dass die Permanentmagnetringpaare 15, 16 sich abstoßend ausgebildet sind. Hierzu sind die Permanentmagnetringe 15,16 vorteilhaft an der axial gegenüberliegenden Seite des Rotors 4 im Bereich 25 angeordnet (nicht dargestellt). Die abstoßende Kraft der Permanentmagnetringpaare 15, 16 wird bei steigendem Druckaufbau zwischen dem Einlass 2 und dem Auslass 3 zurückgeregelt, so dass auch in diesem Fall ein Ausgleich der Axialkraftkomponente *̅K̅*̅ vorhanden ist, der sich über den Spalt 14 und die sich damit verändernde Magnetkraft selbst regelt. Je größer die Axialkraft *̅K̅*̅ dem Betrag nach wird, um so kleiner wird der Spalt zwischen den Magnetringpaaren. Je kleiner der Spalt zwischen den sich abstoßenden Magnetringpaaren 15, 16 wird, umso größer wird die Kraft der Abstoßung, so dass der Axialkraft *̅K̅*̅ entsprechend entgegengewirkt wird durch einen Ausgleich, der sich selbst regelt.

Darüber hinaus wird das Lager 11 bei Druckgleichheit zwischen dem Einlass 2 und dem Auslass 3 durch das Permanentmagnetlager 13 vorgespannt.

### Bezugszahlen

- 1: Vakuumpumpe
- 2: Einlass
- 3: Auslass
- 4: Rotor
- 5: Stator
- 6: pumpaktive Fläche
- 7: pumpaktive Fläche
- 8: Welle
- 9: Lageranordnung
- 10: Lageranordnung
- 11: Schrägkugellager (Festlager)
- 12: Rillenkugellager (Loslager)
- 13: Permanentmagnetlager
- 14: Spalt
- 15: Magnetringpaare
- 16: Magnetringpaare
- 17: elektrischer Antrieb
- 18: Schmiermitteleinrichtung
- 19: konischer Abschnitt der Welle 8
- 20: Schmiermittelreservoir (Vlies)
- 21: Holweckpumpstufe
- 22: Ende der Holweckpumpstufe 21
- 23: Kanal
- 24: Kreuzgewindepumpstufe
- 25: Bereich

- A: Pfeil
- B: Pfeil
- C: Pfeil
- D: Pfeil

- *k*₁: axiale Steifigkeit des Festlagers 11
- *k*₂: axiale Steifigkeit des Magnetlagers 13
- *k*₃: axiale Steifigkeit des Loslagers 12
- *̅K̅*̅: Kraft

## Patentansprüche

1. Einflutige Vakuumpumpe mit einem Einlass und einem Auslass, mit einem Rotor und einem Stator, wobei der Rotor mit zwei Lagern drehbar im Stator gelagert ist, **dadurch gekennzeichnet, dass** zusätzlich zu den zwei Lagern (11, 12) ein in axialer Richtung wirkendes Magnetlager (13) vorgesehen ist.

2. Vakuumpumpe nach Anspruch 1, **dadurch gekennzeichnet, dass** das zusätzliche Lager (13) als ein eine Axial- und eine Radialkraft auf den Rotor (4) ausübendes Lager (13) ausgebildet ist, oder dass das zusätzliche Lager (13) als ein ausschließlich in axialer Richtung wirkendes Lager (13) ausgebildet ist.

3. Vakuumpumpe nach Anspruch 1 oder 2, **dadurch gekennzeichnet, dass** das Magnetlager (13) als Permanentmagnetlager oder als aktives Magnetlager ausgebildet ist.

4. Vakuumpumpe nach einem der vorhergehenden Ansprüche, **dadurch gekennzeichnet, dass** wenigstens eines der zwei Lager (11, 12) zur Lagerung des Rotors (4) als Wälzlager ausgebildet ist.

5. Vakuumpumpe nach Anspruch 4, **dadurch gekennzeichnet, dass** das wenigstens eine Lager (11, 12) als Kugellager ausgebildet ist.

6. Vakuumpumpe nach Anspruch 5, **dadurch gekennzeichnet, dass** das wenigstens eine Lager (11, 12) als Schrägkugellager oder als Rillenkugellager ausgebildet ist.

7. Vakuumpumpe nach einem der vorhergehenden Ansprüche, **dadurch gekennzeichnet, dass** wenigstens eines der zwei Lager (11, 12) zur Lagerung des Rotors (4) als aktives Magnetlager oder als Luftlager ausgebildet ist.

8. Vakuumpumpe nach einem der vorhergehenden Ansprüche, **dadurch gekennzeichnet, dass** ein hochvakuumseitig angeordnetes Wälzlager (11) als schmiermittelfreies Wälzlager ausgebildet ist.

9. Vakuumpumpe nach einem der Ansprüche 1 bis 7, **dadurch gekennzeichnet, dass** ein Wälzlager (11, 12) mit Schmiermittelschmierung ein Schmiermittelreservoir (26) und/oder eine Schmiermittelpumpe (19) aufweist.

10. Vakuumpumpe nach einem der vorhergehenden Ansprüche, **dadurch gekennzeichnet, dass** die zwei Lager (11, 12) der Vakuumpumpe (1) als Loslager (10) und als Festlager (9) ausgebildet sind, und dass das zusätzliche Magnetlager (13) als ein das Festlager (9) vorspannendes Lager (13) ausgebildet ist.

11. Vakuumpumpe nach einem der vorhergehenden Ansprüche, **dadurch gekennzeichnet, dass** das zusätzliche Magnetlager (13) als anziehendes oder abstoßendes Magnetlager ausgebildet ist.

12. Vakuumpumpe nach einem der vorhergehenden Ansprüche, **dadurch gekennzeichnet, dass** das zusätzliche aktive Magnetlager als geregeltes Magnetlager ausgebildet ist.

13. Vakuumpumpe nach einem der vorhergehenden Ansprüche, **dadurch gekennzeichnet, dass** eine axiale Steifigkeit *k*₁ einer Festlageraufnahme größer ist als die axiale Steifigkeit *k*₃ einer Loslageraufnahme und eine axiale Steifigkeit *k*₂ des Magnetlagers (13).

14. Vakuumpumpe nach einem der vorhergehenden Ansprüche, **dadurch gekennzeichnet, dass** die Vakuumpumpe (1) als Schraubenpumpe und/oder als Kreuzgewindepumpe und/oder als Turbomolekularpumpe und/oder als Molekularpumpe mit wenigstens einer Gaede- und/oder Holweckpumpstufe ausgebildet ist.
